# EUROPÄISCHE PATENTANMELDUNG

(11) **EP 2 087 971 A2**
(43) Veröffentlichungstag der Anmeldung: **12.08.2009**
(21) Anmeldenummer: 09001473.9
(22) Anmeldetag: 04.02.2009
(51) Int. Cl.: B26D 1/10, B26D 7/00

(54) **Schneidvorrichtung**

(30) Priorität: 08.02.2008 DE 102008009843
(71) Anmelder: Bystronic Armatec GmbH, 91710 Gunzenhausen (DE)
(72) Erfinder:
(74) Vertreter: Dreiss

(57) **Zusammenfassung**

Die Erfindung betrifft eine Schneidvorrichtung (10) zum Beschneiden eines überstehenden Umfangsabschnitts (6) mindestens einer flexiblen Schicht (5) in einem Mehrschichtaufbau (1) umfassend die flexible Schicht (5) sowie mindestens zwei Platten (2, 3, 4), auf der die flexible Schicht (5) mit einem zumindest bereichsweisen, zu beschneidenden Überstand (6) über die Ränder (7) der Platten (2, 3, 4) angeordnet ist, mit einer Schneideinrichtung (20), die eine Schneidkante (21) aufweist, wobei die Schneideinrichtung (20) relativ zum Mehrschichtaufbau (1) entlang zumindest eines Teils dessen Umfangs bewegbar ist zum Schneiden des Überstands (6), wobei die Schneideinrichtung (20) in einer Richtung (23), die eine Bewegungskomponente senkrecht zur Fläche (42) des Mehrschichtaufbaus (1) aufweist, oszillierend bewegbar ist.

## Beschreibung

Die Erfindung betrifft eine Schneidvorrichtung zum Beschneiden eines überstehenden Umfangsabschnitts mindestens einer flexiblen Schicht in einem Mehrschichtaufbau umfassend die flexible Schicht sowie mindestens zwei Platten, auf der die durchgehend flexible Schicht mit einem zumindest bereichsweisen, zu beschneidenden Überstand über die Ränder der Platten angeordnet ist mit einer Schneideinrichtung, die eine Schneidkante aufweist, wobei die Schneideinrichtung relativ zum Mehrschichtaufbau entlang dessen Umfang oder entlang zumindest eines Teils des Umfangs bewegbar ist, zum Schneiden des Überstandes. Derartige Schneidvorrichtungen sind im Stand der Technik bekannt, wobei sich die vorliegende Erfindung vor allem, jedoch nicht ausschließlich, auf Anwendungen in der Glasindustrie richtet, zum Schneiden von flexiblen Zwischenschichten in Mehrschichtaufbauten aus Glas, wobei, soweit die nachfolgende Beschreibung auf derartige Mehrschichtaufbauten Bezug nimmt, hierdurch keine Beschränkung bedingt sein soll. Grundsätzlich können auch andere Mehrschichtaufbauten, die als Zwischenschicht, eine flexible Schicht oder Folie aufweisen, Verwendung finden.

Insbesondere bei Mehrschichtplatten aus Glas ist es bekannt, eine oder mehrere Schichten aus flexiblem synthetischem Material insbesondere in Form von Folien zwischen zwei Glasplatten anzubringen, wobei die flexible Schicht zwischen den Glasplatten aus einer oder mehreren Einzelschichten aufgebaut sein kann. Darüber hinaus ist es auch möglich, dass mehrere Platten verwendet werden, wobei zwischen je zwei benachbarten Platten stets eine oder mehrere flexible Schichten angeordnet sind. Derartige Multischichtaufbauten sollen erfindungsgemäß umfasst sein.

Diese flexiblen Schichten werden auf eine Größe zugeschnitten, bei der sie über die Außenränder der Platten hinausragen und anschließend durch Entfernen jenes Abschnitts des flexiblen Materials, der sich über die Platten hinaus erstreckt, beschnitten werden oder durch Beschneiden der flexiblen Schicht auf einen definierten Überstand, bevor die Platten im Falle von Mehrschichtaufbauten einem Verbindungsprozess unterzogen werden, bei dem derartige Glasscheiben mit den dazwischen liegenden Folien z. B. zu Verbundssicherheitsglas verbunden werden.

Im Stand der Technik ist es bekannt, Schneidklingen oder Messer zu verwenden, die bezogen auf die seitlichen Flächen der Glasplatten manuell vorgerückt werden. Hiermit ist jedoch ein hoher Personalaufwand verbunden, da die Schneidklingen oder Messer durch das Personal geführt werden und darüber hinaus ist die Arbeit je nach Zwischenschicht kraftintensiv, so dass Ermüdungserscheinungen auftreten können. Die Produktionsrate ist dadurch verringert.

Als weiterer Stand der Technik sind Schneidköpfe in Verwendung, welche eine motorgetriebene Rotationsscheibe aufweisen. Zwar lösen diese Schneidköpfe das Problem, das mit den manuellen Schneiden verbunden ist. Die Zwischenschicht, aus dem flexiblen Material, neigt jedoch dazu, sich unvorhersehbar beim Beschneiden zu dehnen und zu schrumpfen. Durch diese undefinierbare Art und Weise der Verformung während des Schnitts können Welligkeiten und andere Unregelmäßigkeiten entstehen, so dass ein definierter Restüberstand der beschnittenen Zwischenschicht zum Rand des Glases nicht mehr vorhanden ist.

Diese Probleme versucht nun im Stand der Technik die DE 698 05 680 T2 dadurch zu lösen, dass die Schnittkräfte zumindest teilweise abgefangen werden, indem Anschlagmittel vorgesehen sind, die so angeordnet werden, dass sie an der zu schneidenden Stelle eine Gegenkraft zu der von der Rotationsscheibe ausgeübten Kraft bewirken. Allerdings sind insbesondere bei dickeren Zwischenschichten sowie größeren Vorschubgeschwindigkeiten diese Maßnahmen nicht ausreichend.

Es ist nun Aufgabe der Erfindung, eine Schneideinrichtung zum Beschneiden eines überstehenden Umfangsabschnitts mindestens einer flexiblen Schicht eines Mehrschichtaufbaus bereitzustellen, welche es ermöglicht, ein größeres Spektrum von Zwischenschichtmaterialien zu bearbeiten und die Verarbeitungsgeschwindigkeit zu steigern.

Diese Aufgabe wird gelöst durch eine Schneidvorrichtung mit den gattungsbildenden Merkmalen, bei der die Schneideinrichtung in einer Richtung, oszillierend hin und her bewegbar ist, wobei die Bewegungsrichtung der oszillierenden Bewegung eine Bewegungskomponente senkrecht zur Fläche des Mehrschichtungsbaus aufweist.

D. h. es findet eine oszillierende, also hin- und hergehende Bewegung der Schneideinrichtung in eine Richtung statt, die entweder senkrecht zur Fläche des Mehrschichtaufbaus gegeben ist, oder unter einem Winkel größer 0 aber kleiner 180° hierzu verläuft, d.h. eine Bewegungskomponente quer zur Fläche besitzt, wodurch die auftretenden Schnittkräfte sich besser an den Platten abstützen können und undefinierte Verformungen reduziert werden.

Durch die oszillierende Bewegung wird die Belastung in Vorschubrichtung auf das flexible Material verringert, indem eine schneidende Bewegung der Schneideinrichtung auf das Material gegenüber einer drückenden Bewegung auf das Material dominiert.

Besonders bevorzugt ist es dabei, dass die Schneideinrichtung mit einer Positioniereinrichtung zum Positionieren der Schneideinrichtung relativ zum Mehrschichtaufbau und insbesondere zu den mindestens zwei Platten des Mehrschichtaufbaus zusammenwirkt. Durch die Positioniereinrichtung kann die Schneideinrichtung relativ zu den Platten, insbesondere zur Glaskante, sofern es sich um eine Glasplatte handelt, positioniert werden. Dazu kann die Positioniereinrichtung eine Tasteinrichtung zum Antasten an die Platte oder Platten aufweisen. Dies ist insbesondere bei Lage- oder Formungenauigkeiten oder einem gekrümmten Verlauf des Multischichtaufbaus von Vorteil.

Die Schneideinrichtung kann dabei ein Messer oder eine Klinge aufweisen.

Nach einer besonders bevorzugten Ausführungsform kann vorgesehen sein, dass die Richtung, in der die Schneideinrichtung oszillatorisch bewegbar ist, unter einem Winkel α (Neigung) von 45° bis 90° zur Fläche des Mehrschichtaufbaus verläuft, wobei die Neigung sowohl mit als auch gegen die Bewegungsrichtung zwischen Schneideinrichtung und Mehrschichtaufbau (Transport- oder Schneidrichtung) vorgesehen sein kann. D. h. es kann vorgesehen sein, dass das in Richtung auf den Multischichtaufbau weisende Ende, also das in Einbaulage nach unten weisende Ende der Schneideinrichtung, dem eingespannten Ende, das in Einbaulage z. B. oberhalb des Multischichtaufbaus vorgesehen ist, vorausläuft oder dass dieses Ende dem oben eingespannten Ende nachläuft. Eine Neigung quer zur Schneidrichtung ist in aller Regel nicht vorgesehen.

Die Schneideinrichtung kann dabei in einer Führungseinrichtung gehaltert sein, wobei die Führungseinrichtung die Schneideinrichtung verdrehgesichert, aber z. B. in Richtung der oszillierenden Bewegung gleitend oder elastisch gehalten, führen kann. Auf diese Weise kann die oszillierende Bewegung einfach realisiert werden.

Dabei kann vorgesehen sein, dass ein Antrieb für die oszillierende Bewegung vorgesehen ist, der die Schneideinrichtung über elektrische, pneumatische oder mechanische Impulse in die oszillierende Bewegung versetzt.

Die Schneidkante der Schneideinrichtung kann dabei parallel zur oszillierenden Bewegungsrichtung oder unter einem Winkel hierzu verlaufen. So kann die Schneideinrichtung beispielsweise senkrecht zur Oberfläche des Multischichtaufbaus oszillierend bewegt werden, durch eine Abschrägung der Schneidkante kann diese dann jedoch unter einem Winkel β zur oszillierenden Bewegung verlaufen. Durch die Abweichung des Winkels von 0 kann der Schnitt in der Art eines Beilhiebs gestaltet werden. Dieser Winkel liegt bevorzugt zwischen 0 bis 20° und noch bevorzugter zwischen 0 und 10° und insbesondere zwischen 0 und 5° zur Richtung der oszillierenden Bewegung.

Des Weiteren kann vorteilhaft vorgesehen sein, dass eine Fixiereinrichtung vorgesehen ist, die im Bereich der Schneideinrichtung während des Schneidens die Schichten des Multischichtaufbaus in Richtung senkrecht zur Fläche des Multischichtaufbaus belastet. Dabei kann vorgesehen sein, dass eine entsprechende Fixiereinrichtung mindestens eine Andruckrolle aufweist, die eine Kraft senkrecht zur Fläche des Multischichtaufbaus auf den Multischichtaufbau ausübt, wobei die Abstützung des Multischichtaufbaus auf der Gegenseite entweder durch einen Stütztisch z. B. einer Fördereinrichtung, auf der der Multischichtaufbau gelagert ist, erfolgen kann oder wahlweise kann zusätzlich oder alternativ mindestens eine Gegenrolle vorgesehen sein, die die Gegenkraft bereitstellt. Dadurch wird der Bereich eingeschränkt, in dem sich die flexible Zwischenschicht zwischen den Platten verformen kann und die Schnittqualität kann verbessert werden.

Dabei können die Rollen, nämlich die Andruck- und/oder die Gegenrollen, lenkbar gestaltet sein und insbesondere auch in Richtung senkrecht zur Oberfläche des Multischichtaufbaus verfahren werden, um den Druck, mit dem die Rollen gegen den Multischichtaufbau anliegen, einzustellen und diese in Eingriff mit dem Multischichtaufbau zu bringen. Hierzu kann vorgesehen sein, dass wenigstens die Andruckrollen in Richtung senkrecht zur Oberfläche bewegbar sind. In aller Regel wird das die mindestens eine Rolle sein, die dem Stütztisch gegenüberliegt. Die Rollen können dabei federnd oder pneumatisch aber auch in anderer Weise in Richtung der Belastung vorgespannt sein.

Besonders vorteilhaft kann vorgesehen sein, dass die Führungseinrichtung mit der Fixiereinrichtung gekoppelt ist, so dass bei lenkbaren Rollen eine Lenkung der Führungseinrichtung einschließlich der Fixiereinrichtung erfolgen kann, wobei Ungenauigkeiten und der Verlauf der zu bearbeitenden Kante des Multischichtaufbaus durch die Positionier- bzw. Tasteinrichtung ertastet und dann an die Führungseinrichtung weitergegeben werden kann. Auf diese Weise kann die seitliche Andrückkraft, mit der die Schneideinrichtung gegen den Multischichtaufbau anliegt, gering gehalten werden, da eine unmittelbare Anpassung der Bewegung der Schneideinrichtung an den Verlauf der Kante des Multischichtaufbaus erfolgen kann. Aufgrund dieser Reduzierung der notwendigen Andrückkraft an den Multischichtaufbau können auch kleinere und leichtere Scheiben bearbeitet werden, da diese nicht weggeschoben werden. Durch die lenkbaren Rollen kann auch einem geschwungenen Glasverlauf gut gefolgt werden.

Zur Erzielung einer Relativbewegung zwischen dem Multischichtaufbau und der Schneideinrichtung kann vorgesehen sein, dass in bekannter Weise entweder die Schneideinrichtung und/oder der Multischichtaufbau bewegt wird, wobei eine Bewegung des Multischichtaufbaus über eine Fördereinrichtung, insbesondere einen Rollen- oder Riemenförderer, erfolgen kann, auf den der Multischichtaufbau aufgelegt ist. Alternativ können auch sowohl die Schneideinrichtung als auch der Multischichtaufbau zur Erzielung einer Relativbewegung zueinander bewegt werden.

Die Führungseinrichtung der Schneideinrichtung ist daher entweder ortsfest oder verfahrbar ausgeführt.

Weitere Vorteile und Merkmale der Erfindung ergeben sich aus den übrigen Anmeldungsunterlagen. Die Erfindung wird im Folgenden anhand einer Zeichnung näher erläutert. Dabei zeigen:
- Figur 1: einen Querschnitt durch einen Mehrschichtaufbau;
- Figur 2: eine schematische Draufsicht auf eine Gesamtanordnung;
- Figur 3: einen vergrößerten Querschnitt von Figur 2 im Bereich der Schneideinrichtung;
- Figur 4: eine Seitenansicht;
- Figur 5: eine Seitenansicht in variierter Anordnung;
- Figur 6: eine weitere Anordnung in einer Seitenansicht;
- Figur 7: eine Anordnung gemäß Figur 6 im Querschnitt;
- Figuren 8 und 9: weitere Ausgestaltungen in Seitenansichten;
- Figur 10: eine Gesamtanlage mit einer Schneidvorrichtung gemäß der Erfindung;
- Figuren 11 und 12: vorteilhafte Ausgestaltungen der Schneideinrichtung.

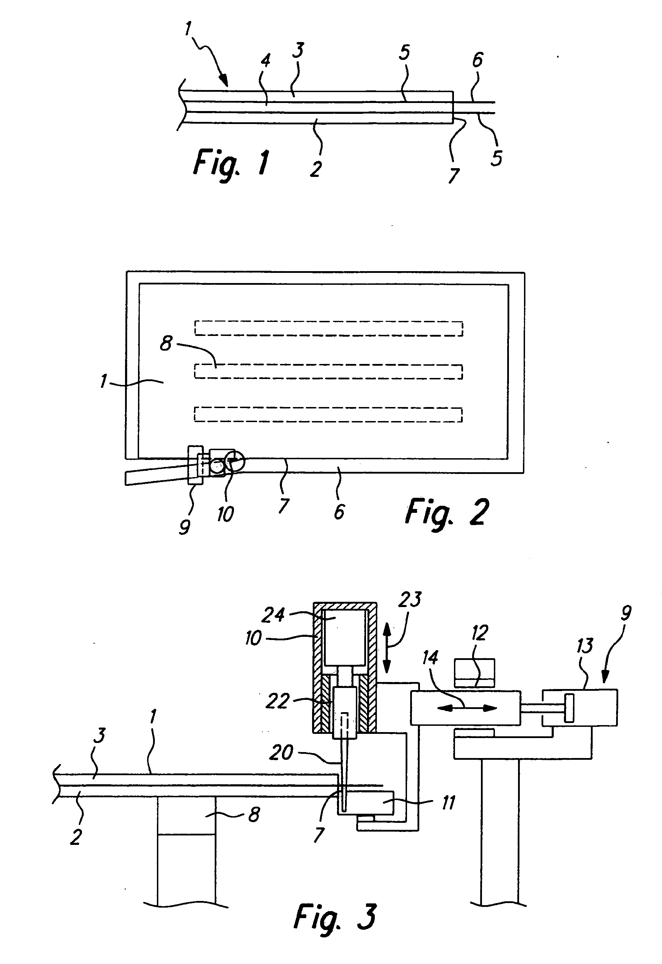

Figur 1 zeigt einen Ausschnitt aus einem Querschnitt durch einen Multischichtaufbau, wobei die Erfindung hier anhand einer Glasmehrschichtplatte, wie sie beispielsweise zur Herstellung von Verbundsicherheitsglas verwendet wird, gezeigt wird. Der Mehrschichtaufbau, der in seiner Gesamtheit mit dem Bezugszeichen 1 versehen ist, besteht dabei aus einer ersten Platte oder Scheibe 2, die durch eine Glasscheibe gebildet ist, sowie aus einer zweiten Glasscheibe 3, die als obere Deckscheibe dient, wohingegen die Glasscheibe 2 als untere Grundscheibe für den Mehrschichtaufbau dient. Dazwischen ist hier eine weitere Glasplatte als Mittelscheibe 4 vorgesehen, wobei alternativ auch mehrere Mittelscheiben 4 zwischen den Scheiben 2 und 3 angeordnet sein können, in der Regel werden jedoch keine Mittelscheiben eingesetzt. Die Scheiben 2, 3 und 4 sind voneinander jeweils durch flexible Zwischenschichten 5 getrennt, wobei es sich hierbei um Kunststofffolien handelt. Die flexiblen Zwischenschichten 5 sind dabei von solcher Größe, dass sie in einem Randbereich einen Überstand 6 aufweisen, der über die Kante 7, die durch die Ränder der Scheiben 2, 3 und 4 gebildet wird, hinausstehen.

Figur 2 zeigt nun eine schematische Draufsicht. Der Mehrschichtaufbau 1 ist hierbei auf einem Stütztisch 8 aufgelegt, der durch den Mehrschichtaufbau 1 hindurch gesehen werden kann. Darüber hinaus ist eine Schneidvorrichtung 10 vorgesehen, mittels derer der Überstand, der über die Kante 7 der Platten 2, 3 und 4 hinaussteht, in einem Schneideprozess abgetrennt oder auf eine definierte Länge beschnitten werden soll.

Die Schneidevorrichtung 10 ist dabei über eine Befestigungseinrichtung 9 in herkömmlicher Weise ortsfest oder verfahrbar festgelegt.

Zum Beschneiden des überstehenden Umfangsabschnitts 6 (Überstand) entlang der Kante 7 bewegt sich die Schneidvorrichtung 10 relativ zum Mehrschichtaufbau 1 entlang der Kante 7. Die Relativbewegung kann dabei durch die Bewegung der Schneideinrichtung 10 oder der Verfahrung des Mehrschichtaufbaus 1 auf dem Stütztisch 8 oder durch eine Kombination beider Bewegungen bewirkt werden.

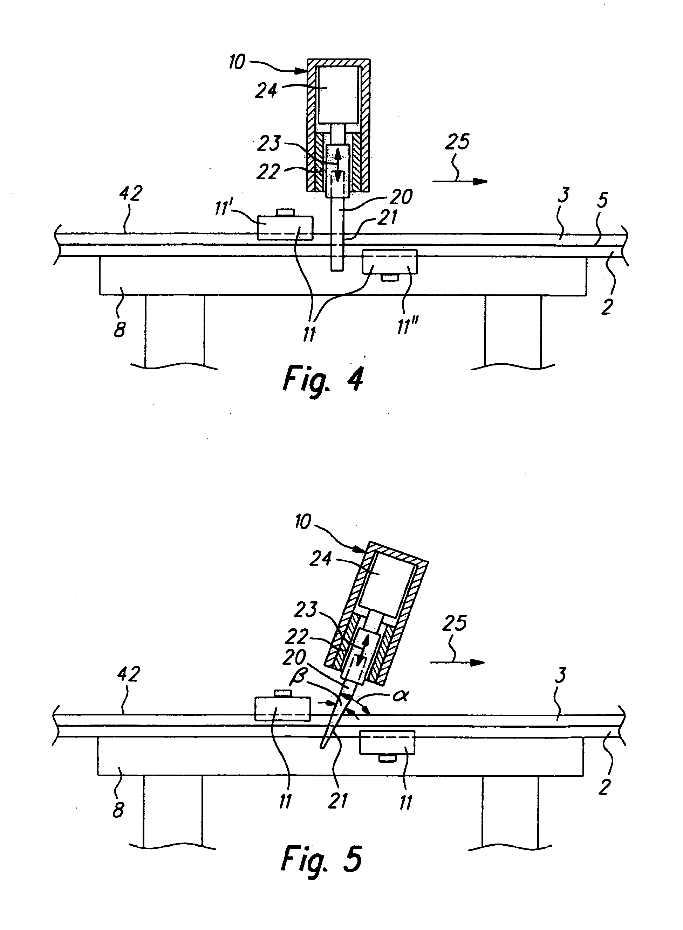

Figur 3 zeigt einen Querschnitt im Bereich der Schneidvorrichtung 10. Als Mehrschichtaufbau 1 ist hierbei lediglich ein Aufbau aus zwei Scheiben 2 und 3 sowie einer Schicht 5 aus einem flexiblen Material gezeigt. Gegenüber Figur 1 ist die Mittelschicht entfallen. Der Mehrschichtaufbau 1 ist auf einem Stütztisch 8 gelagert, wobei die Schneidvorrichtung 10 eine Schneideinrichtung 20 umfasst, die hier als Messer ausgebildet ist, mit einer Schneidkante 21, die in Figuren 4 und 5 dargestellt ist.

Darüber hinaus umfasst die Schneidvorrichtung 10 eine Tasteinrichtung 11 zum Antasten an eine oder mehrere der Platten 2 bis 4 des Mehrschichtaufbaus 1. Dazu ist die Tasteinrichtung 11 mit einer Lagerung, die Teil der Befestigungseinrichtung 9 ist, verbunden, die die Schneideinrichtung 20 gegen den Mehrschichtaufbau 1 andrückt, wobei hierzu die Lagerung 12 mit einer Andrückeinrichtung 13 der Befestigungseinrichtung 9 zusammenwirkt und eine Positioniereinrichtung bilden. Die Andrückeinrichtung 13 wird hierbei über die Tasteinrichtung 11 angesteuert, wobei die Schneideinrichtung 20 in Richtung des Doppelpfeils 14 an den Mehrschichtaufbau 1 angedrückt werden kann, um so der Kontur des Mehrschichtaufbaus 1 zu folgen. Die Andrückeinrichtung 13 ist in der Figur pneumatisch dargestellt, kann jedoch aber auch elektrisch, über Federwirkung oder mittels einer anderen Methode die Schneideinrichtung 20 mittels der Tasteinrichtung 11 in Bezug auf den Rand 7 des Mehrschichtaufbaus 1 positionieren.

Die Tasteinrichtung 11 kann dabei aus einer oder mehreren Rollen, Gleitblechen oder anderen Elementen bestehen, die in bekannter Weise eine oder mehrere Einzelplatten des Mehrschichtaufbaus 1 in der Nähe der Schneideinrichtung 20 antasten.

Die Schneidvorrichtung umfasst dabei ein Messer 20 mit einer Schneidkante 21, das in einer Führung 22 verdrehgesichert in Richtung eines Doppelpfeils 23 eine oszillierende Bewegung durchführt. Die oszillierende Bewegung in Pfeilrichtung 23 wird über einen Antrieb 24 auf elektrische, pneumatische oder andere Weise erzeugt.

Figur 4 zeigt nun eine Seitenansicht einer ähnlichen Gestaltung zu Figur 3, wobei hier zwei Tasteinrichtungen 11 vorgesehen sind, wobei die Tasteinrichtung 11' die Scheibe 3 abtastet und die Tasteinrichtung 11" die Scheibe 2, zwischen denen sich die flexible Zwischenschicht 5 befindet.

In den Figuren 4 und 5 ist dabei die Befestigungseinrichtung 9 mit der Andrückeinrichtung 13 und der Lagerung 12 nicht dargestellt. Die Befestigungseinrichtung 9 kann jedoch entsprechend Figur 3 ausgebildet sein.

Die Schneidvorrichtung 10 entspricht dem in Figur 3 Gezeigten, wobei hier die Schneidkante 21 parallel zur Richtung der Bewegung, die mit dem Doppelpfeil 23 bezeichnet ist, ausgebildet ist. Die Bewegungsrichtung der oszillierenden Bewegung verläuft hierbei ebenfalls im 90° Winkel, also senkrecht zur Oberfläche bzw. Fläche des Mehrschichtaufbaus 1, wobei die Fläche mit dem Bezugszeichen 42 bezeichnet ist.

Figur 5 zeigt nun einen analogen Aufbau, wobei hier die Schneideinrichtung 10 unter einem Winkel α zur Oberfläche 42 des Mehrschichtaufbaus 1 geneigt angeordnet ist, wobei der Winkel α zwischen 0° und 180° liegt, so dass auch hier eine Bewegungskomponente der oszillierenden Bewegung quer zur Oberfläche 42 gegeben ist.

Darüber hinaus verläuft die Schneidkante 21 in Figur 4 parallel zur Bewegungsrichtung 23, wohingegen die Schneidkante 21 in Figur 5 unter einem Winkel β zur Bewegungsrichtung, die durch den Doppelpfeil 23 bezeichnet ist, angeordnet sein kann. Die Vorschubrichtung, in der die Schneideinrichtung 10 entlang der Kante 7 bewegt wird, ist hierbei mit dem Bezugszeichen 25 gekennzeichnet. Der Winkel β beträgt hierbei vorzugsweise zwischen 0° und 20°.

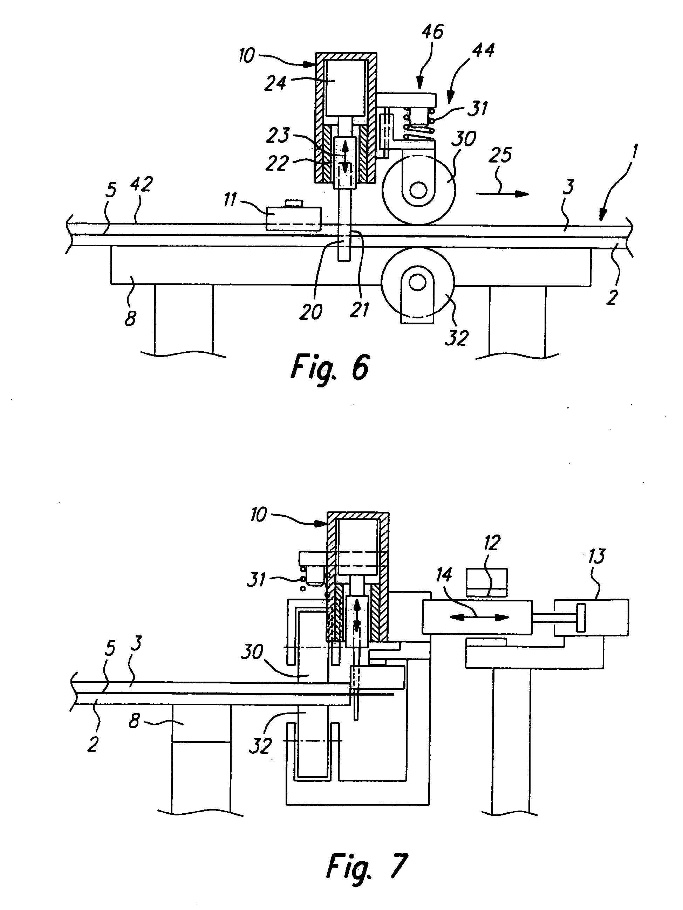

Figur 6 zeigt eine Ausgestaltung, bei der die Schneidvorrichtung wie in Figur 4 angeordnet ist.

Zusätzlich zur Tasteinrichtung 13 ist hier eine Fixiereinrichtung 44 vorgesehen, die die mittlere flexible Schicht 5 zwischen den Scheiben 2 und 3 fixiert, in dem sie die Scheiben 2 und 3 in Richtung senkrecht zur Oberfläche 42 der Scheiben 2 und 3 aufeinander zu belastet. Die Fixiereinrichtung 44 umfasst hierbei zwei Rollen 30 und 32, wobei die Rolle (Andruckrolle) 30 mittels einer Feder oder alternativ mittels eines Pneumatikzylinders oder in anderer bekannter Weise in Richtung des Pfeils 46 in Richtung auf die Deckscheibe 3 belastet ist und gegen die Deckscheibe 3 und damit gegen die Grundscheibe 2 drückt. Die Abstützung der Grundscheibe 2 kann dabei über den Stütztisch 8 vorgesehen sein oder mittels einer weiteren Rolle 32, die als Gegenrolle bezeichnet wird. Durch die Fixiereinrichtung 44 wird der Bereich eingeschränkt, in dem sich die flexible Zwischenschicht 5 zwischen den Platten verformen kann während des Schnittvorgangs und auf diese Weise wird die Schnittqualität weiter verbessert.

Figur 7 zeigt eine entsprechende Anordnung im Querschnitt, wobei wiederum die Andrückeinrichtung 13 und die Lagerung 12 gezeigt sind.

Die Feder 31 ist dabei in Richtung auf den Multischichtaufbau 1 vorgespannt und besitzt einen solchen Federweg, dass auch Multischichtaufbauten 1 aus mehr als den gezeigten zwei Platten, sondern Multischichtaufbauten 1 die Zwischenplatten 4 umfassen, der Schneidvorrichtung 10 zugeführt werden können, indem die Rolle 30 durch Zusammendrücken der Feder 31 in Richtung entgegengesetzt dem Pfeil 46 ausweicht.

Die Gegenrolle 32 ist dahingegen in Richtung senkrecht zu den Platten 2, 3 positionsfest angeordnet, wird jedoch gemeinsam mit der Schneideinrichtung 20 über die Einrichtung 13 zusammen mit der Schneideinrichtung 20 entlang der Richtung 14 bewegt und gegebenenfalls, sofern die Schneidvorrichtung 10 verfahrbar ist, gemeinsam mit der Schneidvorrichtung 10 verfahren. Grundsätzlich können die Rollen 30, 32 auch unabhängig von der Schneidvorrichtung 10 vorgesehen sein.

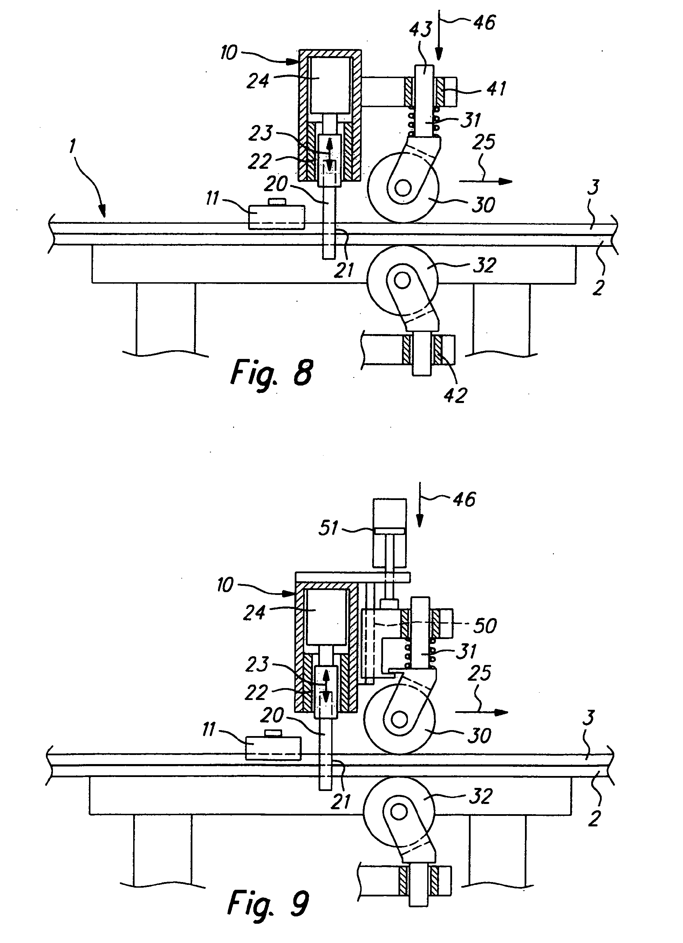

Die Figuren 8 und 9 zeigen nun Ausgestaltungen, bei denen die Schneidvorrichtung 10 an sich unverändert ist, jedoch die Fixiereinrichtung jeweils modifiziert wurde.

So zeigt Figur 8 eine Gestaltung mit lenkbaren Andruckrollen, wobei wiederum die Andruckrolle 30 über eine Feder 31 in Richtung 46 federnd belastet ist und durch Stauchen der Feder 31 entgegen der Richtung 46 von dem Multischichtaufbau 1 abgehoben werden kann. Darüber hinaus können die Andruckrollen 30, 32 mittels Lagerungen 41 und 42 um eine vertikale Achse 43, wobei beide Andruckrollen 30 und 32 um die gleiche Achse 43 verdrehbar sind, gedreht werden. Bei Lage- oder Formungenauigkeiten des Scheibenrandes 7, der von der Tasteinrichtung 11 ertastet wird, kann sich die Schneideinrichtung 20 durch die lenkbaren Andruckrollen 30 und 32 bereits bei geringer seitlicher Andrückkraft immer an den Scheibenrand 7 anpassen. Aufgrund dieser Reduzierung der Andrückkraft werden auch kleinere und damit leichtere Scheiben nicht weggeschoben, wenn die Zwischenschicht 5 beschnitten wird, bevor die Scheiben 2,3 dann zu einem Verbund laminiert werden.

Figur 9 zeigt nun eine Gestaltung, bei der die obere Andruckrolle 30 außer Eingriff gebracht werden kann, wobei die Rollen 30 und 32 als lenkbare Rollen, wie in Figur 8 dargestellt, ausgebildet sind. Über eine verdrehgesicherte Linearlagerung 50 kann die Andruckrolle 30 durch das Betätigungselement 51, das z. B. als Pneumatikzylinder ausgebildet sein kann, in Pfeilrichtung 46 bzw. entgegen der Pfeilrichtung 46 verfahren werden und damit von der Deckscheibe 3 abgehoben werden. Durch diese Gestaltung wird das Aufsetzen der Andruckrolle 30 auf dem Mehrschichtaufbau 1 verbessert und somit die Gefahr des Verschiebens der einzelnen Schichten 2, 3, 4 und 5 gegeneinander weiter minimiert. Darüber hinaus wird auch der Verschleiß der Andruckrolle 30 verringert.

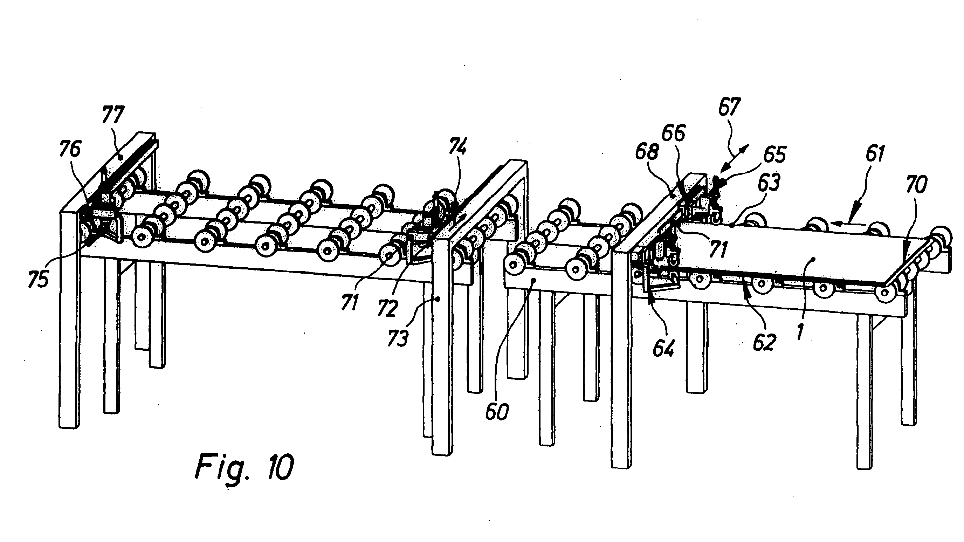

In Figur 10 ist ein Beispiel einer Gesamtanlage dargestellt, die geeignet ist, alle vier Seitenkanten 7 eines rechtwinkligen Mehrschichtaufbaus 1 zu beschneiden. Der Mehrschichtaufbau 1 ist dabei auf eine Förderstrecke 60 aufgelegt worden, die in herkömmlicher Weise, wie dargestellt, als Rollenförderer oder auch als Riemenförderer ausgebildet sein kann. Der Mehrschichtaufbau 1 läuft dabei in Richtung des Pfeils 61 durch die Anlage.

Die Mehrschichtaufbauten 1 werden in aller Regel so in die Anlage eingebracht, dass die in der Darstellung vordere Kante 62 des Mehrschichtaufbaus 1 sich immer in der gleichen Position befindet. Der Überstand 6 im Bereich dieser Kante 62 kann dann durch eine ortsfeste Schneidvorrichtung 64, die der vorstehend beschriebenen Schneidvorrichtung 10 entspricht, beschnitten werden. Auch die nachfolgend beschriebenen Schneidvorrichtungen entsprechen in ihrem wesentlichen Aufbau der Schneidvorrichtung 10 der vorherigen Figuren.

Zum Beschneiden der gegenüberliegenden Kante 63 dient eine erfindungsgemäße Schneidvorrichtung 65, wobei wegen der unterschiedlichen Größe der Mehrschichtaufbauten 1 die Lage dieser Kante 63 variieren kann. Die Schneidvorrichtung 65 kann daher mittels einer Linearführung 66 und eines nicht dargestellten Antriebs in Richtung des Doppelpfeils 67 verfahren werden und somit an die unterschiedlichen Breiten des Mehrschichtaufbaus 1 angepasst werden. Die Linearführung 66 ist dabei an einer Unterkonstruktion 68 angebracht.

Beim weiteren Durchlaufen der Mehrschichtplatte in Richtung des Pfeils 61 durch die Anlage erreicht die Hinterkante 70 des Mehrschichtaufbaus 1 die weitere erfindungsgemäße Schneidvorrichtung 71. Diese ist ebenfalls mittels einer Linearführung 72 auf einer Unterkonstruktion 73 befestigt und mittels eines nicht dargestellten Antriebs in Richtung des Pfeils 74 entlang der Linearführung 73 verfahrbar. Die Schneidvorrichtung 71 ist dabei gegenüber den Schneidvorrichtungen 64 und 65 um 90° gedreht, so dass die Schnittrichtung in Richtung des Pfeils 74 verläuft.

Nachdem die Förderstrecke 60 die Hinterkante 70 des Mehrschichtaufbaus 1 geeignet positioniert hat, wird mittels des Schneidkopfs 66 die Hinterkante 70 beschnitten.

In ähnlicher Weise wird vom Schneidkopf 65 mit der Linearführung 76, die an einer Unterkonstruktion 77 angebracht ist, die Vorderkante 71 des Mehrschichtaufbaus 1 beschnitten.

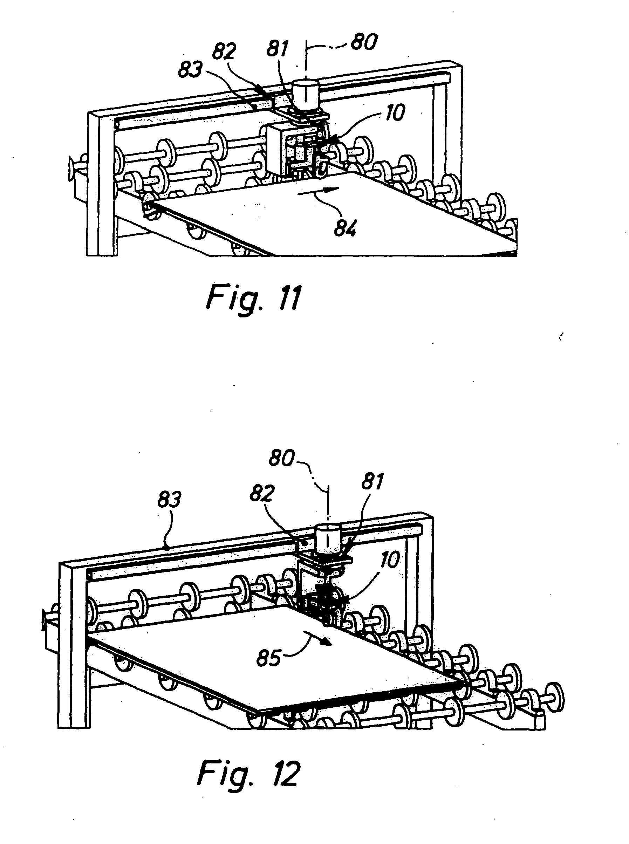

Die Figuren 11 und 12 zeigen vorteilhafte Ausführungen der Schneidvorrichtung 10, wobei diese hier um eine vertikale Achse 80 verschwenkbar angeordnet ist, wozu die Schneidvorrichtung 10 eine drehbare Achse 81 umfasst, an der die Führungseinrichtung 22 der Schneidvorrichtung 10 festgelegt ist. Die Drehachse ist dabei an einer Linearführung 82, die an einer Unterkonstruktion 83 festgelegt ist, montiert und auf diese Weise kann mit derselben Schneidvorrichtung 10 sowohl in Querrichtung entlang des Pfeils 84 in Figur 11 als auch nach entsprechender Drehung in Längsrichtung (Pfeil 85 in Figur 12) beschnitten werden. Gegenüber einer Anordnung in Figur 10 können somit Schneidvorrichtungen 10 eingespart werden.

Darüber hinaus bietet eine entsprechende Vorrichtung, wie sich in Figuren 11 und 12 zeigt, den Vorteil, auch schräg verlaufende Kanten 7 als auch Kanten 7 mit gekrümmtem Verlauf hinsichtlich der flexiblen Zwischenschicht 5 zu beschneiden.

Insgesamt kann so eine Schneidvorrichtung 10 bereitgestellt werden, die eine hohe Flexibilität hinsichtlich der beschneidbaren Mehrschichtaufbauten und eine große Schnittgenauigkeit bei einer hohen Bearbeitungsgeschwindigkeit besitzt.

## Patentansprüche

1. Schneidvorrichtung (10) zum Beschneiden eines überstehenden Umfangsabschnitts (6) mindestens einer flexiblen Schicht (5) in einem Mehrschichtaufbau (1) umfassend die flexible Schicht (5) sowie mindestens zwei Platten (2, 3, 4), auf der die flexible Schicht (5) mit einem zumindest bereichsweisen, zu beschneidenden Überstand (6) über die Ränder (7) der Platten (2, 3, 4) angeordnet ist, mit einer Schneideinrichtung (20), die eine Schneidkante (21) aufweist, wobei die Schneideinrichtung (20) relativ zum Mehrschichtaufbau (1) entlang zumindest eines Teils dessen Umfangs bewegbar ist zum Schneiden des Überstands (6), **dadurch gekennzeichnet, dass** die Schneideinrichtung (20) in einer Richtung (23), die eine Bewegungskomponente senkrecht zur Fläche (42) des Mehrschichtaufbaus (1) aufweist, oszillierend bewegbar ist.

2. Schneidvorrichtung nach Anspruch 1, **dadurch gekennzeichnet, dass** sie eine Positioniereinrichtung (11, 12, 13) aufweist und eine die Schneideinrichtung (20) mit der Positioniereinrichtung (11, 12, 13) zum Positionieren relativ zum Mehrschichtaufbau (1) und insbesondere zu mindestens einer Platte (2, 3, 4) des Mehrschichtaufbaus (1) zusammenwirkt.

3. Schneidvorrichtung nach Anspruch 1 oder 2, **dadurch gekennzeichnet, dass** die Schneideinrichtung (20) ein Messer oder eine Klinge ist.

4. Schneidvorrichtung nach einem der vorangehenden Ansprüche, **dadurch gekennzeichnet, dass** die Richtung (33), in der die Schneideinrichtung (20) oszillierend bewegbar ist unter einem Winkel α (Neigung) von 45° bis 135° zur Fläche (42) des Multischichtaufbaus (1) verläuft, d. h. die Neigung zur Fläche (42) sowohl mit als auch gegen eine Bewegungsrichtung (25) zwischen Schneideinrichtung (20) und Multischichtaufbau (1) vorgesehen ist.

5. Schneidvorrichtung nach einem der vorangehenden Ansprüche, **dadurch gekennzeichnet, dass** die Schneideinrichtung (20) an oder in einer Führungseinrichtung (22) gehaltert ist.

6. Schneidvorrichtung nach Anspruch 5, **dadurch gekennzeichnet, dass** die Schneideinrichtung (20) in oder an der Führungseinrichtung (22) verdrehgesichert geführt ist.

7. Schneidvorrichtung nach Anspruch 5 oder 6, **dadurch gekennzeichnet, dass** die Schneideinrichtung (20) in Richtung der oszillierenden Bewegung (23) in der Führungseinrichtung (22) gleitend oder elastisch geführt ist.

8. Schneidvorrichtung nach einem der vorangehenden Ansprüche, **dadurch gekennzeichnet, dass** die Schneideinrichtung (20) durch einen elektrischen, pneumatischen oder mechanischen Antrieb (24) in die oszillierende Bewegung versetzt wird.

9. Schneidvorrichtung nach einem der vorangehenden Ansprüche, **dadurch gekennzeichnet, dass** die Schneidkante (21) parallel oder unter einem Winkel β zur Richtung der oszillierenden Bewegung verläuft, wobei β insbesondere zwischen 0 und 20°, insbesondere 0° bis 10° und insbesondere 0 bis 5° beträgt.

10. Schneidvorrichtung nach einem der vorangehenden Ansprüche, **dadurch gekennzeichnet, dass** sie eine Fixiereinrichtung (44), die im Bereich der Schneideinrichtung (20) die Schichten (2, 3, 4, 5) des Multischichtaufbaus (1) in Richtung (46) senkrecht zur Fläche (42) des Multischichtaufbaus (1), insbesondere federnd oder pneumatisch belastet, aufweist.

11. Schneidvorrichtung nach Anspruch 10, **dadurch gekennzeichnet, dass** die Fixiereinrichtung (44) mindestens eine Andruckrolle (30) und insbesondere eine Gegenrolle (32) umfasst, wobei eine oder beide Rollen (30, 32) vorzugsweise um eine Achse (46) senkrecht zur Fläche (42) des Multischichtaufbaus (1) verdrehbar sind.

12. Schneidvorrichtung nach Anspruch 11, **dadurch gekennzeichnet, dass** eine oder beide Rollen (30, 32) in eine Richtung (46) senkrecht zur Fläche (42) des Mehrschichtaufbaus (1) verfahrbar sind.

13. Schneidvorrichtung nach einem der vorangehenden Ansprüche, **dadurch gekennzeichnet, dass** zumindest die Schneideinrichtung (20) um eine senkrecht zur Fläche (42) des Mehrschichtaufbaus (1) verlaufende Achse (80) verschwenkbar ist.
